# EUROPÄISCHE PATENTANMELDUNG

(11) **EP 0 982 608 A1**
(43) Veröffentlichungstag der Anmeldung: **01.03.2000**
(21) Anmeldenummer: 99115451.9
(22) Anmeldetag: 05.08.1999
(51) Int. Cl.: G02B 6/36, H04B 10/22

(54) **Optischer Drehkoppler**

(30) Priorität: 21.08.1998 CH 171998
(71) Anmelder: OERLIKON CONTRAVES AG, 8050 Zürich (CH)
(72) Erfinder: Zographos, Georg, 8107 Buchs (CH)
(74) Vertreter: Hotz, Klaus, Dipl.-El.-Ing./ETH

(57) **Zusammenfassung**

Der optische Drehkoppler weist zwei Kopplerteile (**7**; **8**) auf, die je eine Stirnfläche (**9**, **10**) aufweisen, die sich in einem sehr kleinen Abstand von einer idealen mittigen Drehtrennfläche (**11**) befinden. Der eine Kopplerteil (**8**) ist mit einer ersten inneren Kammer versehen, die in Verbindung mit dem Hohlraum eines ersten Hohlleiter-Anschlussteils (**35**) steht. Der andere Kopplerteil (**7**) weist eine zweite innere Kammer auf, die in Verbindung mit dem Hohlraum eines zweiten Hohlleiter-Anschlussteils (**32**) steht. Diese zwei Kammern bilden im Bereich der Drehtrennfläche (**11**) eine Stirnflächen-Drehkopplung für elektromagnetische Wehen. Innerhalb der ersten inneren Kammer ist ein erster mit einem ersten LWL-Anschluss (**34**) verbundener Lichtwellenleiter konzentrisch mit der Drehachse des Drehkopplers angeordnet. Innerhalb der zweiten inneren Kammer ist ein zweiter mit einem zweiten LWL-Anschluss (**33**) verbundener Lichtwellenleiter konzentrisch mit dieser Drehachse angeordnet. Die Enden dieser Lichtwellenleiter bilden eine Stirnflächen-Drehkopplung für Lichtwellen.

## Beschreibung

Die Erfindung bezieht sich auf einen optischen Drehkoppler gemäss dem Oberbegriff des Patentanspruchs **1**.

Mechanische und elektrische Drehkoppler für die Übertragung von Information sind relativ aufwending in der Herstellung und störanfällig. Zur Informationsübertragung in bewegten systemen werden daher häufig rotierende optische Koppler eingesetzt, wie sie beispielsweise aus einer Veröffentlichung von G. Zographos in der Technischen Rundschau, Heft 36, 1992, Seiten 70 bis 75 bekannt sind.

Solche optischen Drehkoppler weisen zwar gegenüber rein elektronischen bzw. elektromechanischen Kopplern eine Reihe von Vorteilen auf und sind einfach in der Herstellung, verlangen jedoch ein grosses Know-how sowohl bezüglich der Funktionsbedingungen als auch der physikalischen Eigenschaften.

Es ist daher Aufgabe der Erfindung, einen optischen Drehkoppler zu schaffen, mit dem die Nachteile des Standes der Technik vermieden werden, indem eine einfache und sichere Lösung für seine Herstellung erreicht werden kann.

Diese Aufgabe wird in vorteilhafter Weise erfindungsgemäss durch einen optischen Drehkoppler nach Patentanspruch **1** gelöst.

Der erfindungsgemässe Drehkoppler erweist sich als besonders vorteilhaft wegen seiner grossen Zuverlässigkeit bei der Informationsübertragung und auch im Hinblick darauf, dass er sich in Kombination mit anderen rotierenden Kopplern aufbauen lässt.

Andere vorteilhafte Ausführungen der Erfindung ergeben sich aus den weiteren abhängigen Ansprüchen.

Die Erfindung wird nachfolgend beispielsweise an Hand einer Zeichnung näher erläutert. Dabei zeigt:
- **Fig. 1**: eine Schnittstelle für drei Übertragungskanäle mit einem optischen Drehkoppler nach der Erfindung,
- **Fig. 2**: eine seitliche Ansicht eines solchen Drehkopplers, bestehend aus zwei durch eine Drehtrennfläche getrennten Kopplerteilen,
- **Fig. 3**: eine andere seitliche Ansicht dieses Drehkopplers,
- **Fig. 4**: eine Draufsicht auf den drehbaren Koppelteil,
- **Fig. 5**: eine Draufsicht des Drehkopplers von der Seite des ruhenden Kopplerteils,
- **Fig. 6**: eine schematische Darstellung des drehbaren Kopplerteils im Bereich der Drehtrennfläche,
- **Fig. 7**: eine schematische Darstellung des ruhenden Kopplerteils im Bereich der Drehtrennfläche,
- **Fig. 8**: eine schematische Darstellung eines optischen Wellenlängenmultiplexer/-demultiplexers,
- **Fig. 9**: eine schematische Darstellung zur Erläuterung der Kopplung von multiplexierten Lichtstrahlen über den Luftspalt zwischen den zwei Kopplerteilen eines Drehkopplers nach der Erfindung, und
- **Fig.10**: eine schematische Darstellung von Mikrowellenpaketen in vorbestimmten Zeitpunkten.

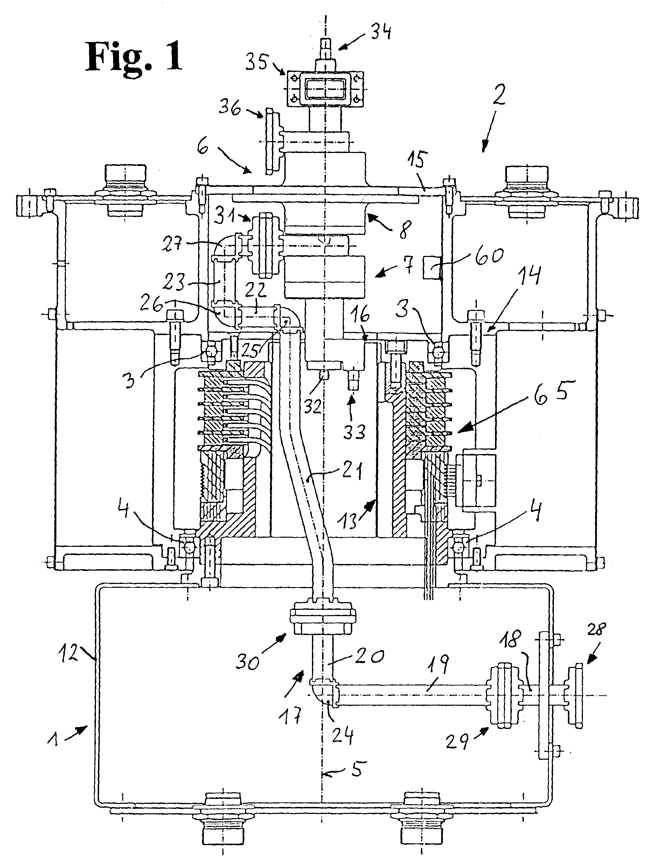

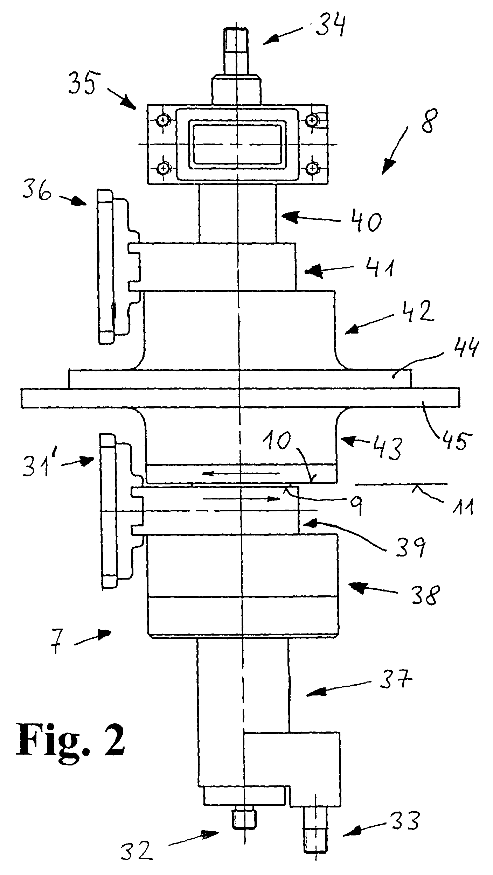

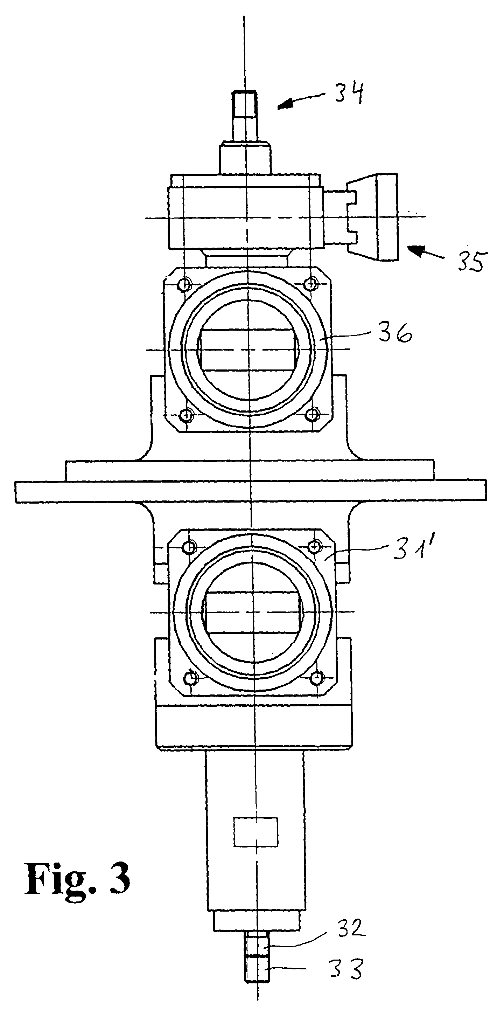

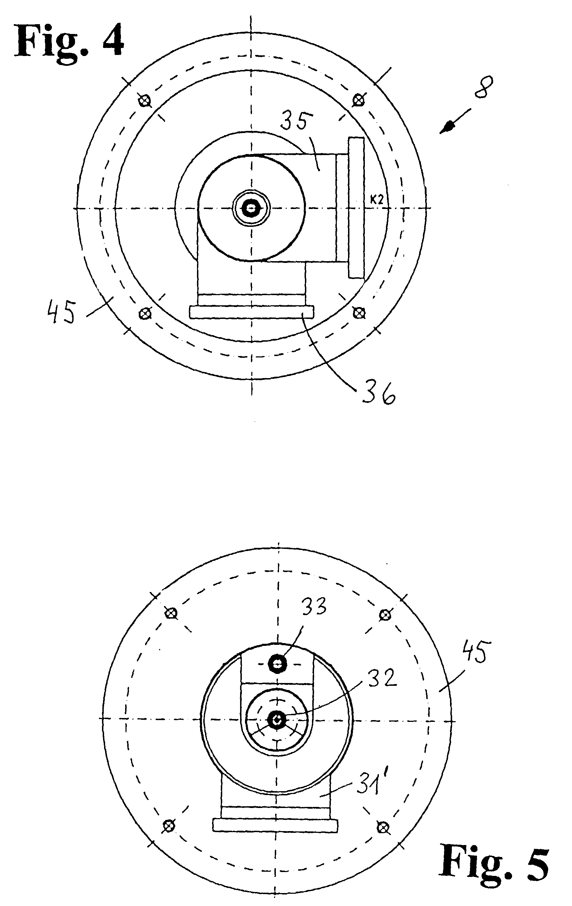

**Fig. 1** zeigt eine Schnittstelle für drei Übertragungskanäle, von denen jeder mit mindestens einem Informationskanal belegt werden kann. Diese Schnittstelle weist eine fest montierte Anlage **1**, in **Fig. 1** unten, und eine bewegbare Vorrichtung **2**, in **Fig. 1** oben, auf die mit Hilfe von zwei Lagern **3**, **4** um eine Drehachse **5** drehbar gelagert ist. Zwischen der Anlage **1** und der Vorrichtung **2** befindet sich ein optischer Drehkoppler **6** nach der Erfindung, der einen mit der Anlage **1** fest verbundenen Kopplerteil **7** und einen mit der Vorrichtung **2** fest verbundenen Kopplerteil **8** aufweist. Diese Kopplerteile **7** und **8** weisen je eine Stirnfläche **9**, bzw. **10** (**Fig. 2**) auf, die sich in einem sehr kleinen Abstand von einer idealen mittigen Drehtrennfläche **11** befinden. Die Anlage **1** umfasst einen beispielsweise im Boden verankerten Grundkörper **12**, an dem eine Basistrommel **13** befestigt ist, und die Vorrichtung **2** umfasst einen drehbaren Trommelkörper **14**, der stirnseitig mit einem den drehbaren Kopplerteil **8** tragenden Plattenring **15** abgeschlossen ist. Der Trommelkörper **14** ist drehbar über die Lager **3** und **4** mit der Basistrommel **13** verbunden, die ebenfalls einen den festen Kopplerteil **7** tragenden Plattenring **16** aufweist. Die Anlage **1** umfasst einen Hohlleiter **17** mit sechs Hohlleiterabschnitten **18**, **19**, **20**, **21**, **22** und **23**, vier Hohlleiterkrümmern **24**, **25**, **26** und **27** und vier Hohlleiterflanschanschlüssen **28**, **29**, **30** und **31**. Der Flanschanschluss **31** umfasst einen Verbindungsteil oder Anschlussteil **31**' (**Fig. 2**), der peripherisch mit der Mantelfläche einer Partie des Kopplerteils **7** verbunden ist, die sich im Bereich neben der Drehtrennfläche **11** befindet. Der Kopplerteil **7** weist zusätzlich einen Koax- oder Hohlwellenleiteranschluss **32** und einen Lichtwellenleiteranschluss **33** auf. Der Kopplerteil **8** seinerseits ist ebenfalls mit einem axialen Lichtwellenleiteranschluss **34** und mit zwei peripherischen Flanschanschlussteilen **35**, **36** für elektromagnetische Wellen versehen, die sich in einem relativ kleinen Abstand voneinander befinden, und deren Ausgangsleitungsachsen vorzugsweise einen Winkel von 90° bilden.

Im unteren Kopplerteil **7** des Drehkopplers nach **Fig. 2** sind drei Hohlleiter-Abschnitte **37**, **38**, **39** erkennbar, wobei der Koax- oder Mikrowellenanschluss **32** (**Fig. 1**) und der Lichtwellenleiteranschluss **33** (**Fig. 1**) an dem einen Ende des unteren Abschnitts **37** angeordnet sind und wobei ein Anschlussteil **31**' des Hohlleiterflanschanschlusses **31** (**Fig. 1**) seitlich mit dem oberen Abschnitt **39** verbunden ist. Der obere Kopplerteil **8** weist vier Hohlleiter-Abschnitte **40**, **41**, **42** und **43** auf, wobei der obere Abschnitt **40** mit einem Flanschverbindungsteil **35** (**Fig. 1**) und der nächste Abschnitt **41** mit einem Flanschverbindungsteil **36** (**Fig. 1**) verbunden ist, und wobei die Verbindungsebenen dieser zwei Verbindungsteile **35** und **36** senkrecht zueinander verlaufen. Die untere Partie des Abschnitts **42** ist in Form eines Ringes **44** und die obere Partie des Abschnitts **43** in Form eines Ringes **45** ausgebildet, wobei die Ringe **44** und **45** miteinander verbunden und derart flanschförmig ausgebildet sind, dass eine Befestigung des Kopplerteils **8** an der Vorrichtung **2** ermöglicht wird. Die Befestigung des Kopplerteils **7** an der Anlage **1** (**Fig. 1**) erfolgt beim Abschnitt **37**, wie in **Fig. 1** dargestellt. Die äusseren Stirnflächen **9** und **10** der Abschnitte **39** bzw. **43** befinden sich in einem sehr kleinen Abstand von der idealen mittigen Drehtrennfläche **11**.

In **Fig. 3** ist der Drehkoppler in einer Lage dargestellt, in der die Verbindungsteile **31**' und **36** frontal und der Verbindungsteil **35** seitlich sichtbar sind.

Aus **Fig. 4** ist klar ersichtlich, dass die Achsen der Verbindungsteile **35** und **36** vorzugsweise einen Winkel von 90° bilden.

Wie aus **Fig. 5** ersichtlich, befinden sich die Achsen des Lichtwellenleiteranschlusses **33**, des Koax- oder Hohlwellenleiteranschlusses **32** und des Anschlussteils **31**' in einer Ebene.

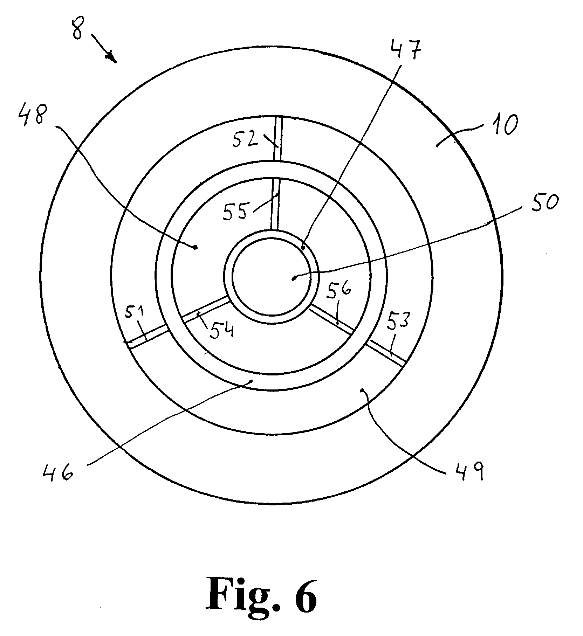

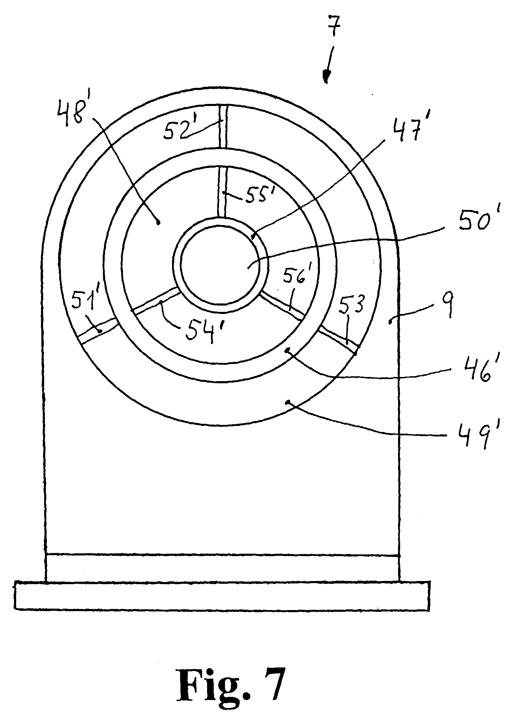

**Fig. 6** zeigt, dass das Innere des Kopplerteils **8** mit der ringförmigen Stirnfläche **10** (**Fig. 2**) zwei vorzugsweise konzentrische innere rohrförmige Wandungen **46** und **47** aufweist, wobei die Wandung **46** eine Trennung zwischen einer inneren Kammer **48** und einer äusseren Kammer **49** innerhalb des Abschnitte **43**, **42** und **41** (**Fig. 2**) bewirkt und wobei im Innenrohr **47** ein Lichtwellenleiter **50** untergebracht ist. Wie in **Fig. 7** dargestellt, weist das Innere des Kopplerteils **7** im Bereich der Stirnfläche **9** ebenfalls zwei solche durch eine rohrförmige Wandung **46**' getrennten Kammern **48**', **49**' sowie ein Innenrohr **47**' auf, in dem ein Lichtwellenleiter **50**' untergebracht ist. Die Stirnflächen **9** und **10** können allerdings in ihrer äusseren Form unterschiedlich ausgebildet sein, wie es sich auch aus einem Vergleich der Figuren **4** und **5** ergibt. Dadurch, dass die Kammern **48** und **48**' und/oder die Kammern **49** und **49**' im Innern der Abschnitte **43** und **39** gleich ausgebildet sind, ergibt sich eine Übergangszone für je eine elektromagnetische Welle über die Kammern **48** und **48**' bzw. **49** und **49**' und für eine Lichtwelle über die gleich oder ähnlich ausgebildeten Lichwellenleiter **50** und **50**'. Nach einer ersten Ausführung der Erfindung erstreckt sich der Lichtwellenleiter **50**' vom Ende des Rohres **47**' bis zum Anschluss **33**, wobei dann eine Mikrowelle vom Anschluss **32** bis zur Kammer **48**' geführt werden kann.

Nach einer zweiten Ausführung der Erfindung erstreckt sich der Lichtwellenleiter **50**' vom Ende des Rohres **47**' bis zum Anschluss **32**, wobei dann eine Mikrowelle vom Anschluss **33** bis zur Kammer **48**' geführt werden kann. Um die rohrförmige Partie **46** (**Fig. 6**) mit der äusseren Partie mindestens eines der Abschnitte **41** bis **43** zu verbinden, können beispielsweise Stege **51**, **52** und **53** ausgebildet oder andere Mittel vorhanden sein; und, um die rohrförmige Partie **47** mit der Partie **46** zu haltern, können weitere Stege **54**, **55** und **56** oder auch andere Mittel vorgesehen sein. Die Stege **51** bis **56**, die in axialer Länge relativ kurz und dünn sein können, so dass sie keine allzu grosse Störung für die Mikrowellen darstellen, könnten sich beispielsweise in Bereich hinter der Stirnfläche **10** befinden. Die entsprechenden rohrförmigen Partien in wenigstens einem der Abschnitte **37** bis **39** könnten ebenfalls mit Stegen **51**', **52**' **53**' bzw. **54**', **55**', **56**' dieser Art (**Fig. 7**) ausgebildet sein. Falls die Wandungen oder Rohre **46**, **47** bzw, **46**', **47**' steif ausgebildet und fest mit den entsprechenden Kopplerteilen verbunden sind, können die Stege **51** bis **56** und **51**' bis **56**' entfallen. Dabei ist zu beachten, dass in den **Fig. 6** und **7** der Durchmesser des Lichtwellenleiters **50** bzw **50**' übertrieben gross dargestellt wurde.

Die Schnittstelle mit dem optischen Drehkoppler nach der Erfindung funktioniert folgendermassen:
Der Trommelkörper **14** (**Fig. 1**) weist einen im wesentlichen zylindrischen Innenhohlraum auf, in den die fest mit dem ruhenden Grundkörper **12** verbundene Basistrommel **13** eingeführt und über die Lager **3** und **4** drehbar gelagert ist. Im ruhenden System wird eine erste elektromagnetische Welle über den Hohlleiterflanschverbindungsteil **28** bis zum anderen Ende des Hohlleiters **17** das heisst bis zum Verbindungsteil **31**' (**Fig. 2**) geführt. Nachher gelangt die elektromagnetische Welle zunächst in den Abschnitt **39** des ruhenden Kopplerteils **7** und über die äussere Kammer **49**' bis zur Drehtrennfläche **11** und dann über die äussere Kammer **49** des Abschnitts **43** des drehbaren Kopplerteils **8** bis zum Verbindungsteil **36**. Eine zweite elektromagnetische Welle gelangt von einem der Anschlüsse **32**
oder **33** bis zum Verbindungsteil **35** im drehbaren System. Die erste elektromagnetische Welle kann auch umgekehrt vom Verbindungsteil **36** bis zum Verbindungsteil **31**' geführt werden, wobei auch die zweite elektromagnetische Welle sich über den umgekehrten Weg, fortpflanzen kann. In diesem Fall gelangt im drehbaren System die zweite elektromagnetische Welle über den Hohlleiterflanschverbindungsteil **35** zunächst in den drehbaren Kopplerteil **8** und dann über die innere Kammer **48** der Abschnitte **40**, **41**, **42** und **43** des Kopplerteils **8** und die innere Kammer **48**' der Abschnitte **39**, **38** und **37** des ruhenden Kopplerteils **7** bis zum Anschluss **32** oder **33**.

Ein Lichtstrahl, der von einem der Anschlüsse **32** oder **33** über den Lichtwellenleiter **50**' im Innern des Kopplerteils **7** bis zur Drehtrennfläche **11** geführt wird, überspringt den entsprechenden Luftspalt und gelangt über den Lichtwellenleiter **50** im Innern des Kopplerteils **8** zum Anschluss **34**, wo er zur weiteren Benutzung zur Verfügung steht. Dadurch entsteht eine On-Axis-Drehkopplung der im oben erwähnten Aufsatz beschriebenen Art. Nach der vorliegenden Erfindung wird das Prinzip der Stirnflächen-Drehkopplung gegenüber der Linsendrehkopplung bevorzugt, weil sie weniger aufwendig und daher auch billiger ist und auch um Farbortsfehler (chromatische Aberrationen) zu vermeiden. Dieser Lichtstrahl kann ebenfalls den umgekehrten Weg machen. Vorzugsweise wird jedoch dieser Lichtwellenleiter für eine bidirektionale Übertragung von Lichtstrahlen ausgestaltet.

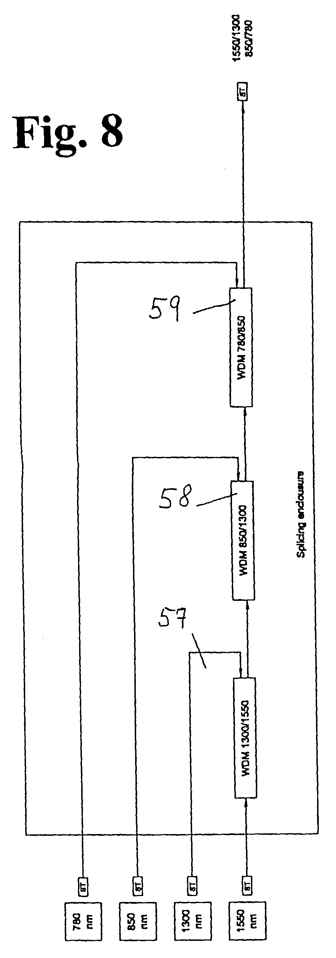

Der dreistufige optische Wellenlängenmultiplexer/-demultiplexer nach **Fig. 8** mit drei handelsüblichen Multipklexer-Elementen **57**, **58** und **59** erlaubt eine Kaskadierung von vier Lichtstrahlen der standardisierten Wellenlängen 1550 nm, 1300 nm, 850 nm und 780 nm. Nach der vorliegenden Erfindung kann je ein derartiger Wellenlängenmultiplexer/-demultiplexer dem Anschluss **32** oder **33** bzw. dem Anschluss **34** vor- bzw. nachgeschaltet sein. Es können auch mehrstufige Wellenlängenmultiplexer/-demultiplexer eingesetzt und/oder beliebige Wellenlängen verwendet werden. Die Lichtleiterfasern müssen nicht unbedingt vom Gradientenindextyp sein, das heisst, man kann nach der vorliegenden Erfindung sowohl Monomode- als auch Multimode-Fasern verwenden.

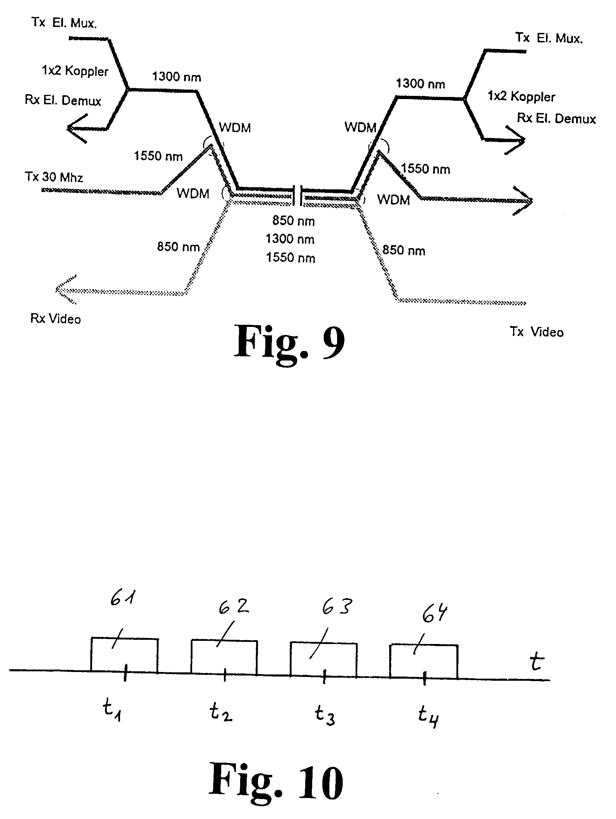

**Fig. 9** zeigt, dass mehrere multiplexierte Lichtstrahlen, nach Wunsch auch bidirektional über ein und dieselbe Lichtwellenleitung übertragen werden können, indem die Lichtstrahlung den Luftspalt des Drehkopplers nach der Erfindung überspringt. Diese Lichtstrahlen können beispielsweise als Träger für Videosignale, Daten oder andere beliebige Signale dienen.

Die Hohlleiter-Drehkupplungen für die elektromagnetischen Wellen im Bereich der Verbindungsteile **31**', **36** und/oder **35** können kapazitive Übergänge aufweisen, wie sie beispielsweise im Buch "Mikrowellentechnik" von Erich Pehl, Band 1, Hüthig-Verlag, Abschnitt 3.7, Seite 161, beschrieben sind.

In weiterer Ausgestaltung der Erfindung kann ein Winkelgeber **60** (**Fig. 1**) vorgesehen sein, durch den in jedem Moment die Lage des rotierenden Kopplerteils **8** gegenüber dem ruhenden Kopplerteil **7** bestimmt werden kann. Dabei können die Mikrowellen, wie **Fig. 10** zeigt, gruppenweise in Form von Mikrowellen-Informationspaketen **61**, **62**, **63**, **64** gerade in Perioden t1 ± △t, t2 ± Δt, t3 ± Δt, t4 ± Δt, ... übertragen werden, in denen beispielsweise die Stege **51** bis **56** des Kopplerteils **8** besser mit den entsprechenden Stegen **51**' bis **56**' des Kopplerteils **7** übereinstimmen, wobei die Zeitpunkte t1, t2, t3, t4 ... (**Fig. 10**) genau den vom Winkelgeber **60** bestimmten Übergängen entsprechen. In Ausführungen ohne derartige Stege können entsprechende Perioden gewählt werden, in denen die Unsymmetriestörugen bei der Mikrowellenübertragung am kleinsten sind.

In weiterer Ausgestaltung der Erfindung kann ein Entzerrer oder Equalizer am Ausgang einer Drehkopplungsstrecke nachgeschaltet sein, um die sich aus den Unregelmässigkeiten des Mikrowellen-Hohlraums ergebenden Störeffekte zu kompensieren.

Die Stege **51** bis **56** bzw. **51**' bis **56**' können in einem Ring aus einem geeigneten dielektrischen Material ausgebildet sein. Es kann auch nur mindestens ein solcher Steg vorhanden sein. Diese Stege können auch Rippen beispielsweise in den Abschnitten **40** bzw. **37** sein.

Die optische Drehkopplung ist vorzugsweise eine Stirnflächen-Drehkopplung, sie kann aber auch eine Linsendrehkopplung sein. Die Stirnflächen können auch durch Vergütung und/oder mittels Antireflexschichten veredelt sein.

Die Schnittstelle nach der Erfindung ist ausgebildet, um vorzugsweise mit einer Drehzahl von 6 bis 600 Umdrehungen pro Minute und mit einer Mikrowellen-Frequenz von 8 bis 10 GHz zu arbeiten.

Zwischen der Basistrommel **13** und dem Trommelkörper **14** können Schleifring-Kontakte **65** beispielsweise für die elektrische Stromversorgung vorgesehen sein.

Die oben dargelegten Ausführungsbeispiele sind lediglich als Veranschaulichung der Möglichkeiten eines solchen Drehkopplers zu verstehen, der auch in anderen Varianten realisierbar ist. Andere sich für Fachleute sofort daraus ergebende Ausführungen beinhalten daher auch die Grundgedanken der Erfindung.

## Patentansprüche

1. Optischer Drehkoppler mit zwei Kopplerteilen (**7**; **8**), die je eine Stirnfläche (**9**, **10**) aufweisen, die sich in einem Abstand von einer idealen mittigen Drehtrennfläche (**11**) befinden, **dadurch gekennzeichnet**,
dass der eine Kopplerteil (8) eine erste innere Kammer (48) aufweist, die in Verbindung mit dem Hohlraum eines ersten äusseren Hohlleiter-Anschlussteils (**35**) dieses einen Kopplerteils (**8**) steht,
dass der andere Kopplerteil (**7**) eine zweite innere Kammer (**48**') aufweist, die in Verbindung mit dem Hohlraum eines zweiten äusseren Hohlleiter-Anschlussteils (**32**; **33**) dieses anderen Kopplerteils (**7**) steht,
dass diese zwei von der Drehtrennfläche (**11**) getrennten Kammern (**48**, **48**') eine Stirnflächen-Drehkopplung für elektromagnetische Wellen bilden,
dass innerhalb der ersten inneren Kammer (**48**) ein erster Lichtwellenleiter (**50**) konzentrisch mit der Drehachse (**5**) dieses einen Kopplerteils (**8**) angeordnet ist,
dass innerhalb der zweiten inneren Kammer (**48**') ein zweiter Lichtwellenleiter (**50**') konzentrisch mit der Drehachse (**5**) dieses anderen Kopplerteils (**7**) angeordnet ist,
und dass die Enden dieser zwei Lichtwellenleiter (**50**, **50**') eine rotierende Drehkopplung für Lichtwellen bilden.

2. Optischer Drehkoppler nach Anspruch **1**,
**dadurch gekennzeichnet**,
dass der eine Kopplerteil (**8**) eine erste zusätzliche innere Kammer (**49**) aufweist, die in Verbindung mit dem Hohlraum eines ersten zusätzlichen Hohlleiter-Anschlussteils (**36**) dieses Kopplerteils (**8**) steht, wobei die erste innere Kammer (**48**) und diese erste zusätzliche innere Kammer (**49**) durch eine erste Wandung (**46**) getrennt sind,
dass der andere Kopplerteil (**7**) eine zweite zusätzliche innere Kammer (**49**') aufweist, die in Verbindung mit dem Hohlraum eines zweiten zusätzlichen Hohlleiter-Anschlussteils (**31**') steht, wobei die zweite innere Kammer (**48**') und diese zweite zusätzliche innere Kammer (**49**') durch eine zweite Wandung (**46**') getrennt sind,
und dass diese zwei von der Drehtrennfläche (**11**) getrennten zusätzlichen Kammern (**49**, **49**') eine Stirnflächen-Drehkopplung für elektromagnetische Wellen bilden.

3. Optischer Drehkoppler nach Anspruch **1** oder **2**,
**dadurch gekennzeichnet**,
dass Multiplexier-Mittel (**57**, **58**, **59**) vorhanden sind, um mehrere multiplexierte Lichtstrahlen, gegebenenfalls auch bidirektional, über diese zwei Lichtwellenleiter (**50**, **50**') zu übertragen, indem die Lichtstrahlung sich über den sich im Bereich der Drehtrennfläche (**11**) befindenden Luftspalt des Drehkopplers fortpflanzt.

4. Optischer Drehkoppler nach einem der Ansprüche **1** bis **3**,
**dadurch gekennzeichnet**,
dass Modulations-Mittel vorhanden sind, um durch die Lichtwellenleiter (**50**,**50**') Lichtstrahlen als Träger für Videosignale zu führen.

5. Optischer Drehkoppler nach einem der Ansprüche **1** bis **4**,
**dadurch gekennzeichnet**,
dass Mikrowellen-Anschlussteile (**31**'; **35**; **36**) vorhanden sind, die kapazitive Übergänge aufweisen.

6. Optischer Drehkoppler nach einem der Ansprüche **1** bis **5**,
**dadurch gekennzeichnet**,
dass Sensor-Mittel (**60**) vorhanden sind, um in jedem Moment die relative Lage der zwei Kopplerteile (**7**, **8**) untereinander zu bestimmen, um Mikrowellenpakete (**61**, **62**, **63**, **64**) gerade in Perioden zu übertragen, in denen die Unsymmetriestörugen bei der Mikrowellenübertragung am kleinsten sind.

7. Optischer Drehkoppler nach einem der Ansprüche **1** bis **6**,
**dadurch gekennzeichnet**,
dass ein Entzerrer am Ausgang einer Drehkopplungsstrecke nachgeschaltet ist, um die sich aus den Unregelmässigkeiten dieser Kammern (**48**, **48**'; **49**, **49**') ergebenden Störeffekte zu kompensieren.

8. Optischer Drehkoppler nach einem der Ansprüche **1** bis **7**,
**dadurch gekennzeichnet**,
dass die Lichtwellenleiter vom Multimode-Typ oder Monomode-Typ sind.

9. Schnittstelle mit einem optischen Drehkoppler nach einem der Ansprüche **1** bis **8**,
**dadurch gekennzeichnet**,
dass sie eine Anlage (**1**) mit einem Grundkörper (**12**) umfasst, an dem eine Basistrommel (**13**) befestigt ist,
dass sie eine Vorrichtung (**2**) mit einem den drehbaren Kopplerteil (**8**) tragenden Trommelkörper (**14**) umfasst,
dass der Trommelkörper (**14**) drehbar über Lager (**3**, **4**) mit der Basistrommel (**13**) verbunden ist, an der der ruhende Kopplerteil (**7**) montiert ist.

10. Schnittstelle nach Anspruch **9**,
**dadurch gekennzeichnet**,
dass sie ausgebildet ist, um mit einer Drehzahl von 0,6 bis 6000 Umdrehungen pro Minute und mit einer Mikrowellenfrequenz von 3 bis 18 GHz zu arbeiten.
